# EUROPEAN PATENT APPLICATION

(11) **EP 2 716 906 A2**
(43) Date of publication of application: **09.04.2014**
(21) Application number: 13186841.6
(22) Date of filing: 01.10.2013
(51) Int. Cl.: F03D 1/06

(54) **Noise reduction tab and method for wind turbine rotor blade**

(30) Priority: 03.10.2012 US 201213644130
(71) Applicant: General Electric Company, Schenectady, New York 12345 (US)
(72) Inventor: Drobietz, Roger, 48499 Salzbergen (DE); Maeder, Thierry Pascal, 85748 Garching bei München (DE); Sengundermudaliar, Gowri, 560066 Bangalore (IN); Drack, Lorenz Edwin, 85748 Garching bei München (DE); Herrig, Andreas, 85748 Garching bei München (DE); Carroll, Christian A., Greenville, SC 29615 (US)
(74) Representative: Bedford, Grant Richard

(57) **Abstract**

Rotor blade assemblies (100) for wind turbines and methods for reducing rotor blade noise are disclosed. A rotor blade assembly (100) includes a rotor blade (16) having external surfaces defining a pressure side (22), a suction side (24), a leading edge, and a trailing edge (28) extending between a tip (32) and a root (34). The rotor blade further defines a span (44) and a chord (42). The rotor blade assembly (100) further includes a tab (110). The tab (110) includes an inner surface (112), an outer surface (114), a forward end (116) and an aft end (118). The inner surface (112) is mounted to one of the pressure side or the suction side. The outer surface (114) has a cross-sectional profile configured to modify an operational value of the rotor blade (16) at the trailing edge (28). The forward end (116) is disposed within the chord (42).

## Description

The present disclosure relates in general to wind turbines, and more specifically to methods and apparatus for reducing wind turbine rotor blade noise.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

In many cases, various components are attached to the rotor blades of wind turbines to perform various functions during operation of the wind turbines. These components may frequently be attached adjacent the trailing edges of the rotor blades and be designed to extend beyond the trailing edge, such as beyond the chord of the rotor blade. For example, noise reducers may be attached adjacent and extend beyond the trailing edges of the rotor blades to reduce the noise and increase the efficiency associated with the rotor blades. However, typical prior art noise reducers have a variety of disadvantages, and may not adequately reduce the noise associated with typical rotor blades. For example, many currently known noise reducers include a plurality of serrations. The serrations are designed to reduce noise when the wind flow over the noise reducer flows in a certain direction. If the direction of wind flow is altered, however, the effectiveness of the serrations in reducing the noise may be reduced. Other currently known noise reducers include bristles. The bristles are spaced apart from each other, and are also designed to reduce noise. However, typical bristles are relatively flexible, and this flexibility combined with the spacing between the bristles may result in a noise reducer that is effectively almost completely permeable during operation of an associated wind turbine. This permeability may cause drastic changes in boundary conditions between a rotor blade and associated noise reducer, thus reducing the effectiveness of the noise reducer in reducing noise.

Thus, improved noise reduction methods and apparatus for rotor blades are desirable. For example, methods and apparatus that provide improved noise reduction characteristics without the above noted drawbacks would be advantageous.

Various aspects and advantages of the invention will be set forth in part in the following description, or may be clear from the description, or may be learned through practice of the invention.

In one embodiment, a rotor blade assembly for a wind turbine is disclosed. The rotor blade assembly includes a rotor blade having external surfaces defining a pressure side, a suction side, a leading edge, and a trailing edge extending between a tip and a root. The rotor blade further defines a span and a chord. The rotor blade assembly further includes a tab. The tab includes an inner surface, an outer surface, a forward end and an aft end. The inner surface is mounted to one of the pressure side or the suction side. The outer surface has a cross-sectional profile configured to modify an operational value of the rotor blade at the trailing edge. The forward end is disposed within the chord.

In another embodiment, a method for reducing rotor blade noise is disclosed. The method includes determining a desired operational value for the rotor blade, inputting a rotor blade characteristic into a processor, and utilizing the rotor blade characteristic in the processor to determine an outer surface cross-sectional profile for a tab. The tab includes an inner surface, an outer surface, a forward end and an aft end. The outer surface cross-sectional profile provides the desired operational value.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a side view of a wind turbine according to one embodiment of the present disclosure;
FIG. 2 is a top view of a rotor blade assembly according to one embodiment of the present disclosure;
FIG. 3 is a bottom view of a rotor blade assembly according to one embodiment of the present disclosure;
FIG. 4 is an exploded cross-sectional view of a portion of a rotor blade assembly according to one embodiment of the present disclosure;
FIG. 5 is an assembled cross-sectional view of a portion of a rotor blade assembly according to one embodiment of the present disclosure; and
FIG. 6 is a flow chart illustrating a method for reducing rotor blade noise according to one embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

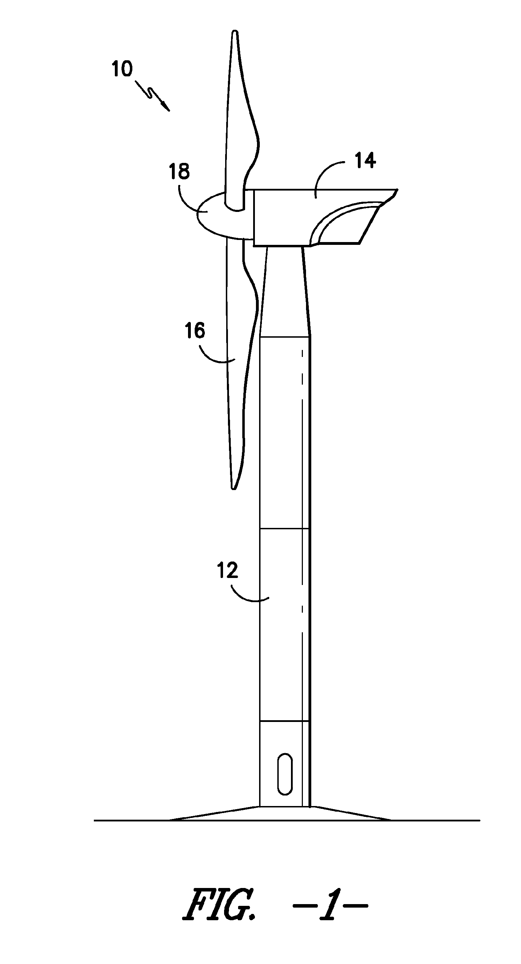

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

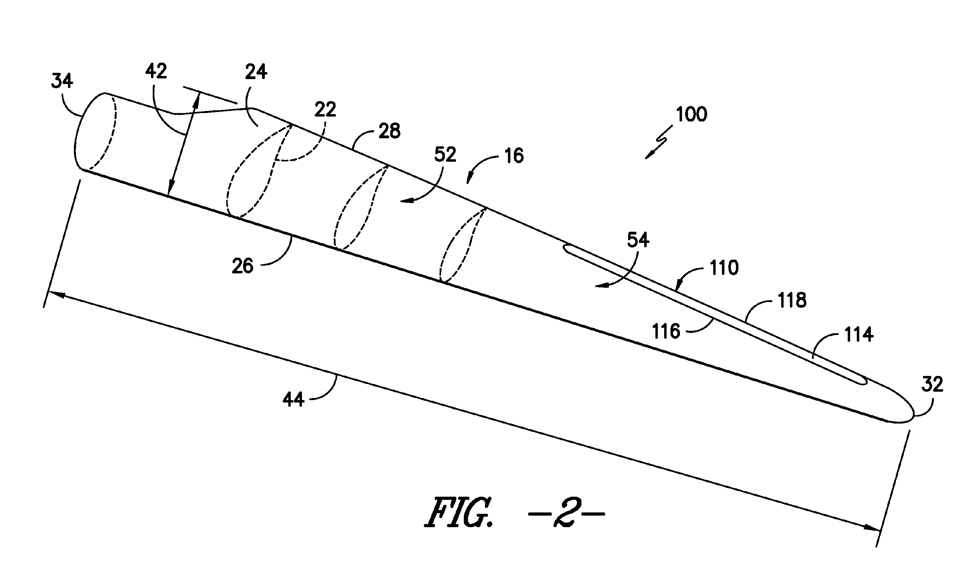

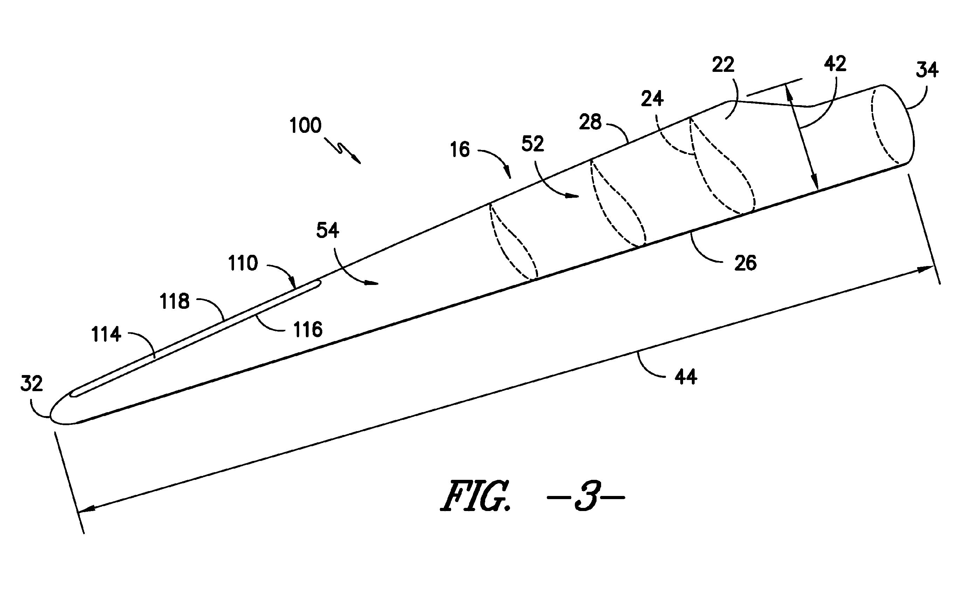

Referring now to FIGS. 2 and 3, a rotor blade 16 according to the present disclosure may include exterior surfaces defining a pressure side 22 and a suction side 24 extending between a leading edge 26 and a trailing edge 28, and may extend from a blade tip 32 to a blade root 34. The exterior surfaces may be generally aerodynamic surfaces having generally aerodynamic contours, as is generally known in the art.

In some embodiments, the rotor blade 16 may include a plurality of individual blade segments aligned in an end-to-end order from the blade tip 32 to the blade root 34. Each of the individual blade segments may be uniquely configured so that the plurality of blade segments define a complete rotor blade 16 having a designed aerodynamic profile, length, and other desired characteristics. For example, each of the blade segments may have an aerodynamic profile that corresponds to the aerodynamic profile of adjacent blade segments. Thus, the aerodynamic profiles of the blade segments may form a continuous aerodynamic profile of the rotor blade 16. Alternatively, the rotor blade 16 may be formed as a singular, unitary blade having the designed aerodynamic profile, length, and other desired characteristics.

The rotor blade 16 may, in exemplary embodiments, be curved. Curving of the rotor blade 16 may entail bending the rotor blade 16 in a generally flapwise direction and/or in a generally edgewise direction. The flapwise direction may generally be construed as the direction (or the opposite direction) in which the aerodynamic lift acts on the rotor blade 16. The edgewise direction is generally perpendicular to the flapwise direction. Flapwise curvature of the rotor blade 16 is also known as pre-bend, while edgewise curvature is also known as sweep. Thus, a curved rotor blade 16 may be pre-bent and/or swept. Curving may enable the rotor blade 16 to better withstand flapwise and edgewise loads during operation of the wind turbine 10, and may further provide clearance for the rotor blade 16 from the tower 12 during operation of the wind turbine 10.

The rotor blade 16 may further define chord 42 and a span 44. As shown in FIGS. 2 and 3, the chord 42 may vary throughout the span 44 of the rotor blade 16. Thus, a local chord may be defined for the rotor blade 16 at any point on the rotor blade 16 along the span 44.

Additionally, the rotor blade 16 may define an inboard area 52 and an outboard area 54. The inboard area 52 may be a span-wise portion of the rotor blade 16 extending from the root 34. For example, the inboard area 52 may, in some embodiments, include approximately 25%, 33%, 40%, 50%, 60%, 67%, 75% or any percentage or range of percentages therebetween, or any other suitable percentage or range of percentages, of the span 44 from the root 34. The outboard area 54 may be a span-wise portion of the rotor blade 16 extending from the tip 32, and may in some embodiments include the remaining portion of the rotor blade 16 between the inboard area 52 and the tip 32. Additionally or alternatively, the outboard area 54 may, in some embodiments, include approximately 25% 33%, 40%, 50%, 60%, 67%, 75% or any percentage or range of percentages therebetween, or any other suitable percentage or range of percentages, of the span 44 from the tip 32.

As illustrated in FIGS. 2 through 5, the present disclosure may further be directed to one or more rotor blade assemblies 100. A rotor blade assembly 100 according to the present disclosure includes a rotor blade 16 and one or more tabs 110. In general, a tab 110 may be configured on an external surface of the rotor blade 16, and may reduce the aerodynamic noise being emitted from the rotor blade 16 during operation of the wind turbine 10. In exemplary embodiments, as shown in FIGS. 2, 4 and 5, a tab 110 may configured on, such as mounted to, the suction side 24 of the rotor blade 16. In alternative embodiments, as shown in FIGS. 3, 4 and 5, a tab 110 may be configured on, such as mounted to, the pressure side 22. It should further be noted that, in some embodiments, a rotor blade assembly 100 may include tabs 110 configured on both the pressure side 22 and the suction side 24.

A tab 110 according to the present disclosure may be formed from any suitable material. In exemplary embodiments, a tab 110 may be formed from a generally non-permeable material. Further, in exemplary embodiments, a tab 110 may be formed from a relatively flexible material, such as a suitable flexible epoxy or a rubber (synthetic or natural).

As shown, a tab 110 according to the present disclosure includes an inner surface 112, and outer surface 114, a forward end 116 and an aft end 118. The forward end 116 and aft end 118 may be positioned such that the forward end 116 is more proximate to the leading edge 26 than the aft end 118 and the aft end 118 is more proximate to the trailing edge 28 than the forward end 116.

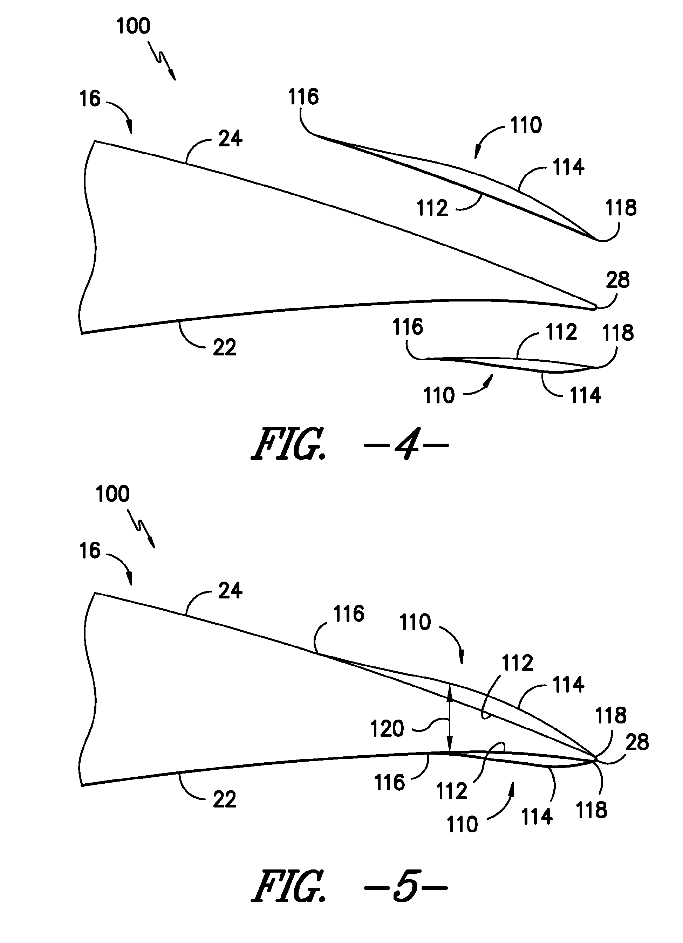

The inner surface 112 may be mounted to one of the pressure side 22 or the suction side 24, as discussed above. As shown, for example, the inner surface 112 may have a contour that generally corresponds to the aerodynamic contour of the one of the pressure side 22 or the suction side 24. Cross-sectional views of these contours are shown in FIGS. 4 and 5. In some embodiments, the entire inner surface 112 may thus be in contact with the one of the pressure side 22 or the suction side 24 when the inner surface 112 is mounted thereon. In other embodiments, however, the inner surface 112 for example include recesses defined therein that do not contact the one of the pressure side 22 or the suction side 24, or portions of the inner surface 112 may otherwise not contact the one of the pressure side 22 or the suction side 24, such that the entire inner surface 112 is not in contact with the one of the pressure side 22 or the suction side 24. In some embodiments, the inner surface 112 may be mounted through use of a suitable adhesive, such as glue, etc. In other embodiments, the inner surface 112 may be mounted through the use of suitable mechanical fasteners, such as nut-bolt combinations, screws, nails, rivets, male-female member combinations, etc. In still other embodiments, the inner surface 112 may be mounted through welding, brazing, or another such suitable process. Additionally, it should be understood that an inner surface 112 may be mounted by virtue of the tab 110 or a portion thereof being integral with the rotor blade 16 or a portion thereof. Further, any suitable coupling methods or apparatus are within the scope and spirit of the present disclosure.

As discussed, a tab 110 further includes a forward end 116 and an aft end 118. Advantageously, when the tab 110 is configured on the rotor blade 16, the forward end 116 may be disposed within the chord 42. Further, in exemplary embodiments, the aft end 118 may additionally be disposed within the chord 42. Thus, in a cross-sectional view as shown in FIGS. 4 and 5, the entire tab 110 may be configured on the rotor blade 16 within the chord 42 (such as the local chord at any cross-section within the span-wise location of the tab 110), and no portion of the tab 110 may extend chord-wise beyond, for example, the trailing edge 28 or the leading edge 26. It should be understood, however, that in some embodiments the aft end 118 may extend slightly beyond the trailing edge 28. Further, while the tab 110 may modify a thickness 120 (defined in a direction generally perpendicular to the chord 42 and span 44) of various portions of the rotor blade assembly 100, such as portion wherein a tab 110 is configured on a rotor blade 16, in exemplary embodiments the thickness 120 at the trailing edge 28 is not modified by a tab 110 or only slightly modified by a tab 110, and may thus be the original thickness of the rotor blade 16 trailing edge 28. The aft end 118 of the tab 110 may thus be disposed at the trailing edge 28 or adjacent to the trailing edge 28, such as within approximately 0.5 meters, within approximately 0.1 meters, within approximately 5 centimeters, within approximately 3 centimeters, or within approximately 1 centimeter of the trailing edge 28. The present inventors have discovered that such advantageous positioning of the tab 110 as discussed above, and particularly entirely within the chord 42 and with an aft end 118 at or adjacent to the trailing edge 28 or alternatively with an aft end 118 extending only slightly beyond the aft end 118 as discussed above may provide significantly improved noise reduction, as discussed below.

Further, the tab 110 in general may advantageously be located chord-wise and span-wise on the rotor blade 16 to further provide improved noise reduction. For example, a tab 110 may be disposed within, such as entirely within, approximately 20%, such as approximately 15%, such as approximately 12%, such as approximately 10% of the chord 42 (such as the local chord at any cross-section within the span-wise location of the tab 110) from the trailing edge 28. Further, a tab 110 may be disposed within, such as entirely within, approximately 40%, such as approximately 35%, such as approximately 33%, such as approximately 30% of the span 42 from the tip 32.

As discussed, a tab 110 further includes an outer surface 112. The outer surface 112 of a tab 110 may have a specifically designed contour that allows the tab 110 to provide the rotor blade 16, and thus the rotor blade assembly 100, with particularly advantageous noise reduction. Thus, the outer surface 112 has a cross-sectional profile (as shown in FIGS. 4 and 5) configured to modify one or more operational values of the rotor blade 16 at the trailing edge 28, thus reducing noise at the trailing edge 28. Operational values according to the present disclosure include, for example, pressure coefficient, boundary layer thickness, and external surface shear stress distribution. The cross-sectional profile, and thus, the contour, of the outer surface 112 may thus be configured to, for example, increase the pressure coefficient at the trailing edge 28, increase the boundary layer thickness at the trailing edge 28, and/or decrease the external surface shear stress distribution at the trailing edge 28. In some embodiments, for example, the outer surface 112 may have a generally curvilinear cross-sectional profile. Further, in some embodiments, the curvilinear cross-sectional profile may be spline-shaped. The spline-shape may be calculated based on various rotor blade characteristics as discussed below such that the resulting cross-sectional profile provides modification of one or more operational values. Still further, in some embodiments, the cross-sectional profile of the outer surface 112 at the aft end 118 and/or the forward end 116 has a contour that corresponds to the contour of the one of the pressure side 22 or suction side 24 on which the tab 110 is configured proximate to that end 116 and/or 118 of the tab 110. Thus, the outer surface 112 may blend relatively smoothly with the one of the pressure side 22 or suction side 24, such that disruptions, sharp angles, etc. are minimized.

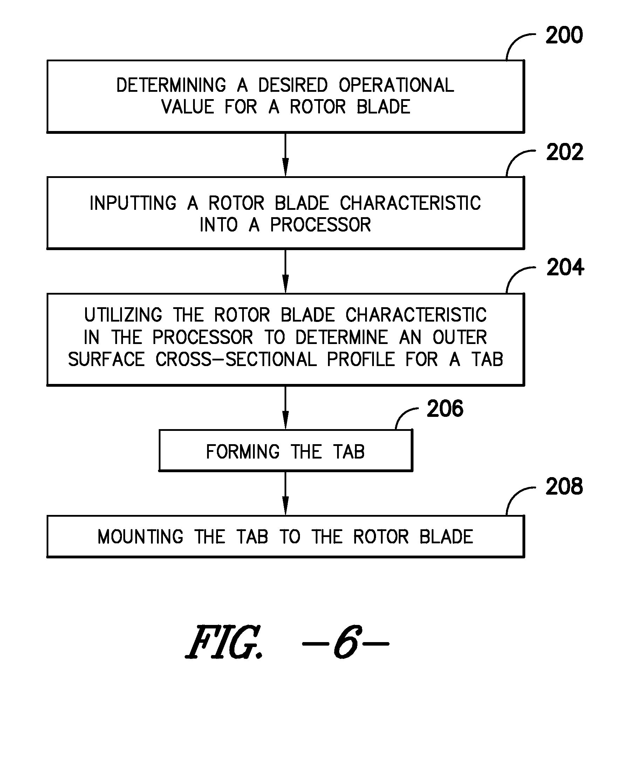

The cross-sectional profile of the outer surface 112 of a tab 110 may thus have a contour that is designed, for example, according to one or more rotor blade characteristics. Rotor blade characteristics include, for example, desired angle of attack for the rotor blade 16, desired flow speed for the rotor blade 16, desired cross-sectional shape of the rotor blade 16 and/or rotor blade assembly 100, span-wise location of the tab 110, chord-wise location of the tab 110, size of the tab 110, etc. The various rotor blade characteristics may, for example, be based on ideal characteristics or environmental conditions for the wind turbine 10, and may be determined experimentally and/or iteratively to determine a particularly advantageous outer surface 112 contour. For example, in some embodiments, one or more rotor blade characteristics may be input into a processor (see step 202 of FIG. 6). In exemplary embodiments, the processor may be a computer. The computer may generally include hardware and/or software that may allow for a tab 110 to be designed for rotor blade assembly 100 and for use with a rotor blade 16 thereof based on inputs, such as rotor blade characteristics, and suitable algorithms. It should be understood that the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that a processor and/or a control system can also include memory, input channels, and/or output channels. In some exemplary embodiments, the processor may include panel method or computational fluid dynamic software and/or hardware, acoustic simulation software based on boundary layer properties, subsonic airfoil design and analysis software and/or hardware, or other suitable aerodynamic or fluid analysis software and/or hardware, acoustic simulation software and/or hardware, or airfoil design and analysis software and/or hardware. Two particularly suitable examples include XFOIL software, developed by researchers at Massachusetts Institute of Technology and publicly available, and RFOIL software, developed by researchers at Delft University of Technology and publicly available.

Additionally, one or more desired operational values for the rotor blade 16 may be determined. These values may be specific values or ranges of values at which rotor blade 16 performance is desired when the rotor blade 16 is subjected to one or more of the various rotor blade characteristics. These desired operational values may additionally be provided in the processor. For example, the operational values may be entered in the processor as desired output values for a rotor blade assembly 100 having input desired rotor blade characteristics.

Further, the rotor blade characteristics may be utilized in the processor to determine outer surface 112 cross-sectional profiles, and thus a contour thereof, for the tab 110 such that the outer surface 112 cross-sectional profile and contour provides the desired operational values for the rotor blade 16 and rotor blade assembly 100. For example, as discussed above, the processor may contain suitable hardware and/or software containing suitable algorithms for producing an outer surface 112 based on a variety of inputs. Thus, after the inputs, such as the rotor blade characteristics and other various inputs are input into the processor, the processor may output an outer surface 112 for a tab 110 that is configured to provide a desired operational value or operational values for the rotor blade 16 and rotor blade assembly 100.

Such determination of the outer surface 112 cross-sectional profile may, in some embodiments, be performed at various cross-sections of the rotor blade assembly 100. For example, rotor blade characteristics may be determined and utilized at a plurality of distinct cross-sections taken at various span-wise locations wherein the tab 110 is to be configured on the rotor blade 16. Outer surface 112 cross-sectional profiles may be determined at each location, as discussed above. The various cross-sectional profiles may then be combined and interpolated therebetween to determined cross-sectional profiles for the outer surface 112 at locations between these initial locations. The combination of initially determined and interpolated cross-sectional profiles may provide the full contour of the outer surface 112. Further, such determinations may be performed iteratively if desired or required such that an outer surface 112 cross-sectional profile and contour is determined that provides the desired operational values.

As shown in FIG. 6, the present disclosure is further directed to methods for reducing rotor blade 16 noise. A method may include, for example, determining one or more desired operational values for a rotor blade 16, as discussed above and shown in step 200. The method may further include inputting one or more rotor blade characteristics into a processor, as discussed above and shown in step 202. The method may further include utilizing the rotor blade characteristics in the processor to determine tab 110 outer surface 112 cross-sectional profiles and thus overall contours such that the cross-sectional profiles and overall contours provide the rotor blade 16 and rotor blade assembly 110 with the desired operational values, as discussed above and shown in step 204.

Still further, a method according to the present disclosure may include, for example, forming a tab 110, as shown in step 206. The tab 110, when configured on a rotor blade 16, may provide the resulting rotor blade assembly 100 with desired operational values as discussed herein. Any suitable manufacturing process, include for example, molding, may be utilized to form the tab 110. Still further, a method according to the present disclosure may include, for example, mounting the tab 110 to a rotor blade 16 to form a rotor blade assembly 100, discussed above and shown in step 208.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A rotor blade assembly for a wind turbine, comprising:
   a rotor blade having external surfaces defining a pressure side, a suction side, a leading edge, and a trailing edge extending between a tip and a root, the rotor blade further defining a span and a chord; and,
   a tab comprising an inner surface, an outer surface, a forward end and an aft end, the inner surface mounted to one of the pressure side or the suction side, the outer surface having a cross-sectional profile configured to modify an operational value of the rotor blade at the trailing edge, the forward end disposed within the chord.
2. The rotor blade assembly of clause 1, wherein the outer surface has a curvilinear cross-sectional profile.
3. The rotor blade assembly of any preceding clause, wherein the curvilinear cross-sectional profile is spline-shaped.
4. The rotor blade assembly of any preceding clause, wherein the aft end is disposed within the chord.
5. The rotor blade assembly of any preceding clause, wherein the cross-sectional profile of the outer surface at the aft end has a contour that corresponds to a contour of the one of the pressure side or the suction side proximate the aft end.
6. The rotor blade assembly of any preceding clause, wherein the operational value is one of pressure coefficient, boundary layer thickness, or external surface shear stress distribution.
7. The rotor blade assembly of any preceding clause, wherein the cross-sectional profile of the outer surface has a contour designed according to a rotor blade characteristic, and wherein the rotor blade characteristic is one of a desired angle of attack of the rotor blade or a desired flow speed for the rotor blade.
8. The rotor blade assembly of any preceding clause, wherein the tab is formed from one of a flexible epoxy or a rubber.
9. The rotor blade assembly of any preceding clause, wherein the tab is disposed within approximately 20% of the chord from the trailing edge.
10. The rotor blade assembly of any preceding clause, wherein the tab is disposed within approximately 40% of the span from the tip.
11. The rotor blade assembly of any preceding clause, wherein the inner surface is mounted to the suction side.
12. The rotor blade assembly of any preceding clause, wherein the tab is a plurality of tabs.
13. A wind turbine, comprising:
   a plurality of rotor blades, each of the plurality of rotor blades having external surfaces defining a pressure side, a suction side, a leading edge, and a trailing edge extending between a tip and a root each of the plurality of rotor blades further defining a span and a chord; and
   a tab comprising an inner surface, an outer surface, a forward end and an aft end, the inner surface mounted to one of the pressure side or the suction side of one of the plurality of rotor blades, the outer surface having a cross-sectional profile configured to modify an operational value of the rotor blade at the trailing edge, the forward end disposed within the chord.
14. The wind turbine of any preceding clause, wherein the outer surface has a curvilinear cross-sectional profile.
15. The wind turbine of any preceding clause, wherein the operational value is one of pressure coefficient, boundary layer thickness, or external surface shear stress distribution.
16. The wind turbine of any preceding clause, wherein the cross-sectional profile of the outer surface has a contour designed according to a rotor blade characteristic, the rotor blade characteristic comprising one of a desired angle of attack of the rotor blade or a desired flow speed for the rotor blade.
17. A method for reducing rotor blade noise, the method comprising:
   determining a desired operational value for the rotor blade;
   inputting a rotor blade characteristic into a processor; and
   utilizing the rotor blade characteristic in the processor to determine an outer surface cross-sectional profile for a tab, the tab comprising an inner surface, an outer surface, a forward end and an aft end, the outer surface cross-sectional profile providing the desired operational value.
18. The method of any preceding clause, wherein the operational value is one of pressure coefficient, boundary layer thickness, or external surface shear stress distribution.
19. The method of any preceding clause, wherein the rotor blade characteristic is one of a desired angle of attack of the rotor blade or a desired flow speed for the rotor blade.
20. The method of any preceding clause, further comprising forming the tab and mounting the tab to the rotor blade.

## Claims

1. A rotor blade (100) assembly for a wind turbine (10), comprising:
a rotor blade (16) having external surfaces defining a pressure side (22), a suction side (24), a leading edge, and a trailing edge (28) extending between a tip (32) and a root (34), the rotor blade further defining a span (44) and a chord (42); and
a tab (110) comprising an inner surface (112), an outer surface (114), a forward end (116) and an aft end (118), the inner surface (112) mounted to one of the pressure side or the suction side, the outer surface (114) having a cross-sectional profile configured to modify an operational value of the rotor blade (16) at the trailing edge (28), the forward end (116) disposed within the chord (42).

2. The rotor blade assembly (100) of claim 1, wherein the outer surface (114) has a curvilinear cross-sectional profile.

3. The rotor blade assembly (100) of claim 2, wherein the curvilinear cross-sectional profile is spline-shaped.

4. The rotor blade assembly (100) of any preceding claim, wherein the aft end (118) is disposed within the chord (42).

5. The rotor blade assembly (100) of any preceding claim, wherein the cross-sectional profile of the outer surface at the aft end (118) has a contour that corresponds to a contour of the one of the pressure side or the suction side proximate the aft end.

6. The rotor blade assembly (100) of any preceding claim, wherein the operational value is one of pressure coefficient, boundary layer thickness, or external surface shear stress distribution.

7. The rotor blade assembly (100) of any preceding claim, wherein the cross-sectional profile of the outer surface (114) has a contour designed according to a rotor blade characteristic, and wherein the rotor blade characteristic is one of a desired angle of attack of the rotor blade or a desired flow speed for the rotor blade (16).

8. The rotor blade assembly (100) of any preceding claim, wherein the tab (110) is formed from one of a flexible epoxy or a rubber.

9. The rotor blade assembly (100) of any preceding claim, wherein the tab (110) is disposed within approximately 20% of the chord from the trailing edge (28).

10. The rotor blade assembly (100) of any preceding claim, wherein the tab (110) is disposed within approximately 40% of the span from the tip (32).

11. The rotor blade assembly (100) of any preceding claim, wherein the inner surface (112) is mounted to the suction side.

12. A method for reducing rotor blade noise, the method comprising:
determining (200) a desired operational value for the rotor blade (16);
inputting (202) a rotor blade characteristic into a processor; and
utilizing (204) the rotor blade characteristic in the processor to determine an outer surface cross-sectional profile for a tab (110), the tab (110) comprising an inner surface (112), an outer surface (114), a forward end (116) and an aft end (118), the outer surface (114) cross-sectional profile providing the desired operational value.

13. The method of claim 12, wherein the operational value is one of pressure coefficient, boundary layer thickness, or external surface shear stress distribution.

14. The method of claim 12 or claim 13, wherein the rotor blade characteristic is one of a desired angle of attack of the rotor blade (16) or a desired flow speed for the rotor blade (16).

15. The method of any of claims 12 to 14, further comprising forming the tab (110) and mounting the tab (110) to the rotor blade (16).
